# EUROPÄISCHE PATENTSCHRIFT

(11) **EP 2 923 784 B1**
(45) Veröffentlichungstag und Bekanntmachung des Hinweises auf die Patenterteilung: **28.09.2016**
(21) Anmeldenummer: 14199726.2
(22) Anmeldetag: 22.12.2014
(51) Int. Cl.: B23B 31/16, B23Q 17/00

(54) **SPANNFUTTER**
Chuck
Mandrin

(30) Priorität: 27.03.2014 DE 102014104285
(43) Veröffentlichungstag der Anmeldung: 30.09.2015
(73) Patentinhaber: Röhm GmbH, 89567 Sontheim (DE)
(72) Erfinder: Neubauer, Christian, 86751 Mönchsdeggingen (DE)
(74) Vertreter: Hentrich Patentanwälte PartG mbB

(56) Entgegenhaltungen:
- DE-A1-102010 039 608
- DE-A1-102011 081 122
- DE-B3- 10 241 826
- US-A1- 2008 157 487

## Beschreibung

Die Erfindung betrifft ein Spannfutter mit einem Futterkörper, gemäß dem Oberbegriff des Anspruchs 1.

Bei modernen Werkzeugmaschinen können die Maschinenspindeln mit sehr hohen Drehzahlen betrieben werden, was die Bearbeitungszeiten signifikant verkürzt und damit die Produktivität deutlich erhöht. Allerdings tritt sowohl bei der Innenspannung als auch bei der Außenspannung grundsätzlich das Problem auf, dass durch die Fliehkraft die von den Spannbacken auf das Werkstück ausgeübte Spannkraft verändert und insbesondere im Falle der Außenspannung reduziert wird, so dass eine sichere Einspannung des Werkstücks nicht immer gewährleistet ist. Dies kann zum einen dadurch berücksichtigt werden, dass die Anfangsspannkraft soweit erhöht wird, dass trotz der Fliehkraft induzierten Spannkraftverluste eine Mindestspannkraft gewährleistet bleibt. Aus Sicherheitsaspekten ist dies aber unbefriedigend, so dass in der Kraftübertragungskette zur Verstellung der Spannbacken Sensoren angeordnet sind, die die tatsächlich wirkende Spannkraft erfassen, so dass das Sensorsignal einem Regelkreis zugeführt werden kann, um bei einer Variation der Spannkraft dies auszugleichen.

Ein Spannfutter gemäß dem Oberbegriff des Anspruchs 1 ist aus DE 10 2011 081 122 A1 bekannt.

Der Erfindung liegt daher die Aufgabe zugrunde, ein Spannfutter der eingangs genannten Art so auszubilden, dass die Anordnung des Sensors die Übertragung der Spannkraft und die Einspannung des Werkstücks durch die Spannbacken nicht beeinträchtigt.

Diese Aufgabe wird nach der Erfindung bei einem Spannfutter der eingangs genannten Art dadurch gelöst, dass der Sensor dem Kreuzversatz zugeordnet ist.

Der Sensor ist damit in der Schnittstelle zwischen der Grundbacke und der Aufsatzbacke positioniert und beeinträchtigt damit nicht die Anlage der Spannbacke an dem Werkstück. Dadurch gibt sich insbesondere die Möglichkeit, dass der Sensor nicht unmittelbar in die Kraftübertragungskette integriert ist, sondern parallel dazu angeordnet ist, indem die Veränderung eines in der Kraftübertragungskette angeordneten Bauteils erfasst wird.

Im Rahmen der Erfindung ist daher besonders bevorzugt, wenn bei dem Kreuzversatz, der durch senkrecht zueinander ausgerichtete Nut und Quersteg in einer der Backen von Grundbacke und Aufsatzbacke mit korrespondierenden Strukturen in der anderen Backe gebildet ist, der Sensor der der anderen Backe zugewandten Oberfläche des Quersteges zugeordnet ist. Durch diesen Quersteg wird nämlich in der Kraftübertragungskette die Kraft von der Grundbacke in die Spannbacken und von dort auf das Werkstück eingeleitet, wobei auf den Quersteg in radialer Richtung des Spannfutters Druckkräfte einwirken, die zu einer Verformung des Querstegs führen, die durch den Sensor erfasst werden können.

Weiterhin im Rahmen der Erfindung bevorzugt ist es, wenn der Sensor an der Grundbacke angeordnet ist, da so die Möglichkeit besteht, dass die Grundbacke mit beliebigen Aufsatzbacken betrieben werden kann, ohne dass die Möglichkeit der Erfassung der Spannkraft beeinträchtigt wird, also die Option besteht, die Aufsatzbacken auszuwechseln.

Als günstig hat es sich erwiesen, wenn der Sensor aus einem Dehnmessstreifen (DMS) gebildet ist und insbesondere wenn der Sensor durch ein Sensorplättchen gebildet ist, das aus einem Trägersubstrat besteht, in dem die DMS-Messstruktur ausgebildet ist. Bei dieser Art des Sensors besteht die Möglichkeit, diesen beispielsweise durch Laserschweißen am Kreuzversatz zu befestigten, ohne dass eine große thermische Belastung der gesamten Backe erfolgt.

Darüber hinaus besteht im Rahmen der Erfindung auch die Möglichkeit, dass das Sensorplättchen dem Quersteg zugeordnet ist, an dem durch Sputtern und Fotolithografie die Messstruktur direkt ausgebildet ist. Es besteht also nicht die zwingende Notwendigkeit, Grundbacke und Sensorplättchen separat zu fertigen und sodann miteinander zu verbinden, vielmehr besteht die Möglichkeit, das Sensorplättchen selber als integralen Bestandteil der Backe auszugestalten. In diesem Zusammenhang ist es dann weiterhin vorteilhaft, wenn der Quersteg an einem in der Backe positionierbaren Nutenstein ausgebildet ist. Dies bietet dann den Vorteil, dass nur der Nutenstein zur Direktstrukturierung in die dafür erforderliche Beschichtungsanlage eingebracht werden muss, also die Einbringung der deutlich voluminöseren Backe vermieden ist. Ein Nutenstein kann aber auch beim aufgeschweißten Sensorplättchen verwendet werden und nicht nur bei der Direktstrukturierung.

Da ein quaderförmiger Nutenstein nicht steif genug ist, wird die Verformung nur zum Teil durch den Sensor erfasst, so dass zur Steigerung der Steifigkeit des Nutensteines dieser Versteifungsleisten aufweist, dieser insbesondere eine T-Form besitzt.

Im Rahmen der Erfindung weiterhin vorgesehen ist, dass zur Feinjustage ein Stellglied zwischen der Grundbacke und der Aufsatzbacke vorgesehen ist, mit der insbesondere das Ruhe-Signal bzw. Brückennull-Signal des Sensors einstellbar ist.

Im Rahmen der Erfindung weiterhin vorgesehen ist, dass eine Telemetrie-Einheit zur berührungslosen Energie- und Datenübertragung vorgesehen ist, oder dass der Grundbacke eine elektrische Speicherzelle und ein Funkmodul zugeordnet ist.

Im folgenden wird die Erfindung an in der Zeichnung dargestellten Ausführungsbeispielen näher erläutert; es zeigen:
- Fig. 1: eine perspektivische Darstellung eines erfindungsgemäßen Spannfutters mit eingesetzten Grundbacken und Aufsatzbacken,
- Fig. 2: einen Längsschnitt durch das Spannfutter aus Fig. 1,
- Fig. 3: eine isolierte Darstellung der Grundbacke und der Aufsatzbacke aus Fig. 2,
- Fig. 4: eine perspektivische Darstellung der isolierten Grundbacke,
- Fig. 5: eine der Fig. 3 entsprechende Darstellung einer alternativen Ausführungsform von Grundbacke und Aufsatzbacke,
- Fig. 6: eine der Fig. 4 entsprechende Darstellung einer alternativen Ausführungsform einer Grundbacke,
- Fig. 7: eine der Fig. 4 entsprechende Darstellung einer Ausführungsform mit aufgeschweißten Sensorplättchen,
- Fig. 8: eine der Fig. 4 entsprechende Darstellung einer weiteren alternativen Ausführungsform,
- Fig. 9: eine perspektivische Darstellung einer Aufsatzbacke mit befestigten Sensorplättchen,
- Fig. 10: eine perspektivische Darstellung einer Grundbacke,
- Fig. 11: eine weitere alternative Ausführungsform in einer perspektivischen Darstellung,
- Fig. 12: eine weitere alternative Ausführungsform in einer perspektivischen Darstellung,
- Fig. 13: eine weitere alternative Ausführungsform in einer perspektivischen Darstellung,
- Fig. 14: eine der Fig. 3 entsprechende Darstellung mit dem Stellglied,
- Fig. 15: eine der Fig. 8 entsprechende Darstellung mit einem gegenüber der Grundbacke separat ausgebildeten Nutenstein.
- Fig. 16: eine geschnittene Ansicht eines kompletten Spannbackens mit Nutenstein, Sensorplättchen und Versorgungs- und Signalleitung, und
- Fig. 17: eine perspektivische Ansicht ohne Aufsatzbacke und Befestigungsschrauben.

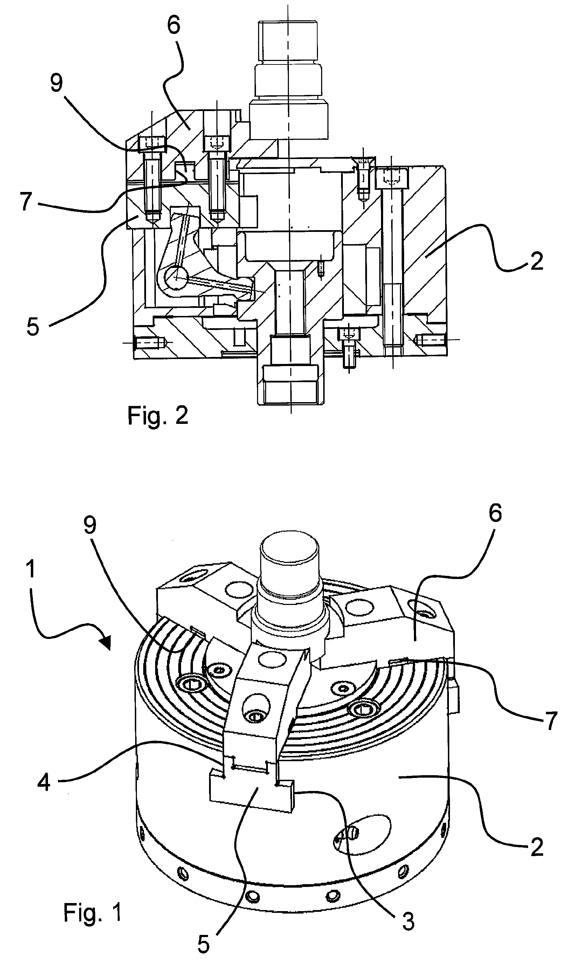

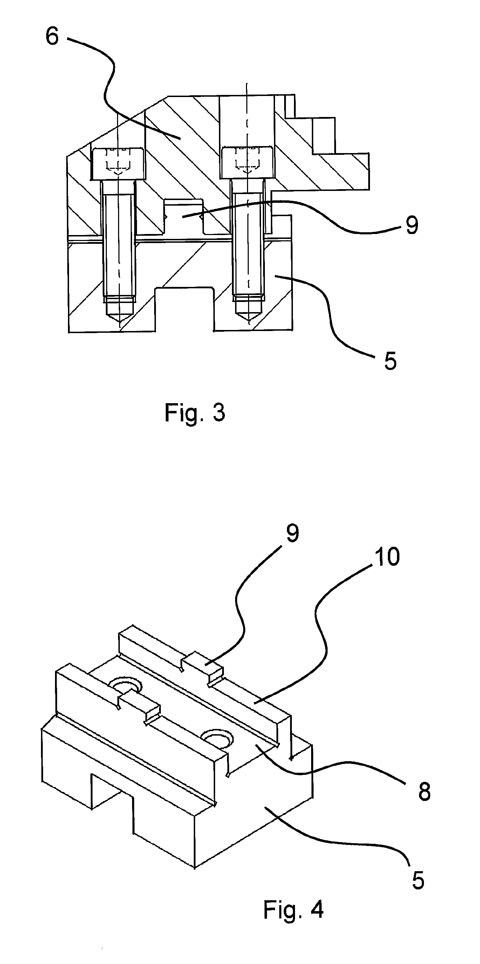

In der Zeichnung ist in Fig. 1 ein Spannfutter 1 dargestellt in der Ausführungsform als Hebelfutter mit einem hysteresearmen Futterkörper 2. Bei diesem Spannfutter 1 sind in drei radial verlaufenden Führungsaufnahmen 3 Spannbacken 4 geführt, die aus einer Grundbacke 5 und einer an der Grundbacke 5 in einem Kreuzversatz 7 angeordneten Aufsatzbacke 6 gebildet ist. Der Kreuzversatz 7 ist dabei durch senkrecht zueinander ausgerichtete Nuten 8 und Querstege 9 in einer der Backen von Grundbacke 5 und Aufsatzbacke 6 mit korrespondierenden Strukturen in der anderen Backe gebildet. In der Ausführungsform nach den Fig. 3 und 4 ist die Nut 8 in der Grundbacke 5 ausgebildet mit Nutwänden 10, auf denen der Quersteg 9 ausgebildet ist.

Zur Erfassung der Spannkraft ist der Spannbacke 4 ein Sensor 11 zugeordnet, und zwar dem Kreuzversatz 7. Dabei besteht die Möglichkeit, dass der Sensor 11 entweder der Grundbacke 5 oder der Aufsatzbacke 6 zugeordnet ist, wobei die Ausbildung an der Grundbacke 5 den Vorteil bietet, dass die Aufsatzbacken 6 ausgewechselt werden können, ohne dass die Erfassung der Spannkraft beeinträchtigt ist. Der Sensor 11 ist aus einem Dehnmessstreifen (DMS) 12 gebildet, der in konventioneller Ausgestaltung einfach durch Kleben auf dem Quersteg 9 positioniert werden kann.

Bevorzugt und daher in der Zeichnung dargestellt ist es aber, wenn der Sensor 11 durch ein Sensorplättchen 13 als Dünnfilmstruktur gebildet ist, dass durch Laserschweißen auf den Quersteg 9 befestigt werden kann, wobei das Sensorplättchen 13 aus einem 0,1 bis 0,2 mm starken Trägersubstrat aus einer Metallfolie besteht, in dem die DMS-Meßstruktur durch Sputtern und Fotolithografie aufgebracht wird. Eine alternative Befestigung durch Kleben ist gleichfalls möglich.

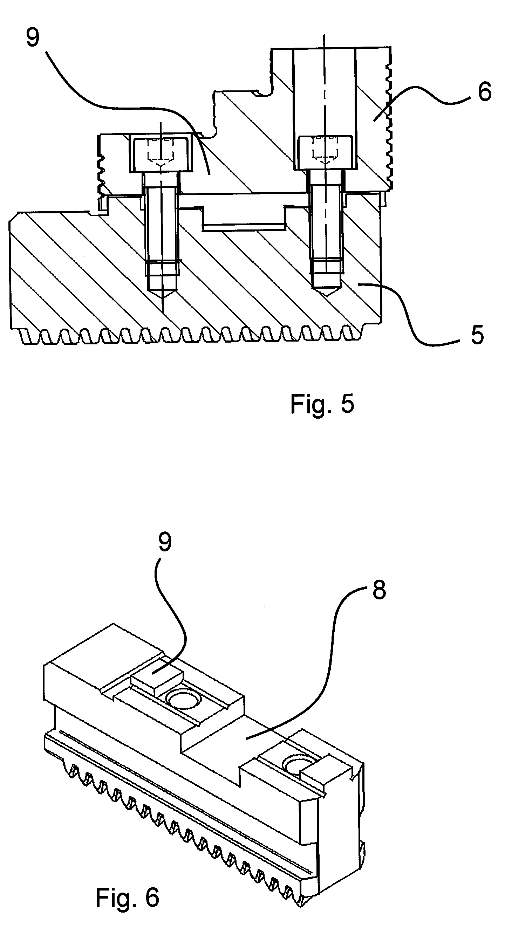

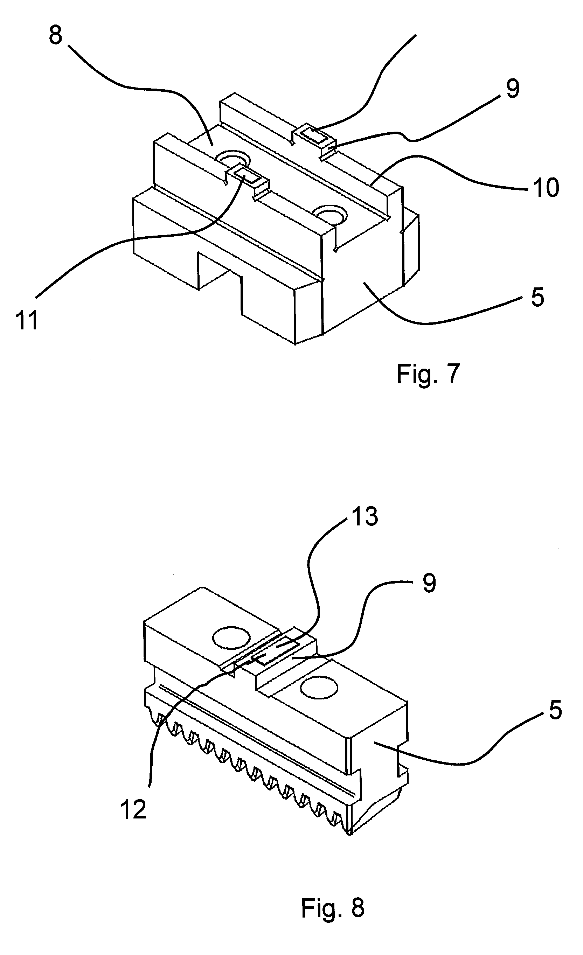

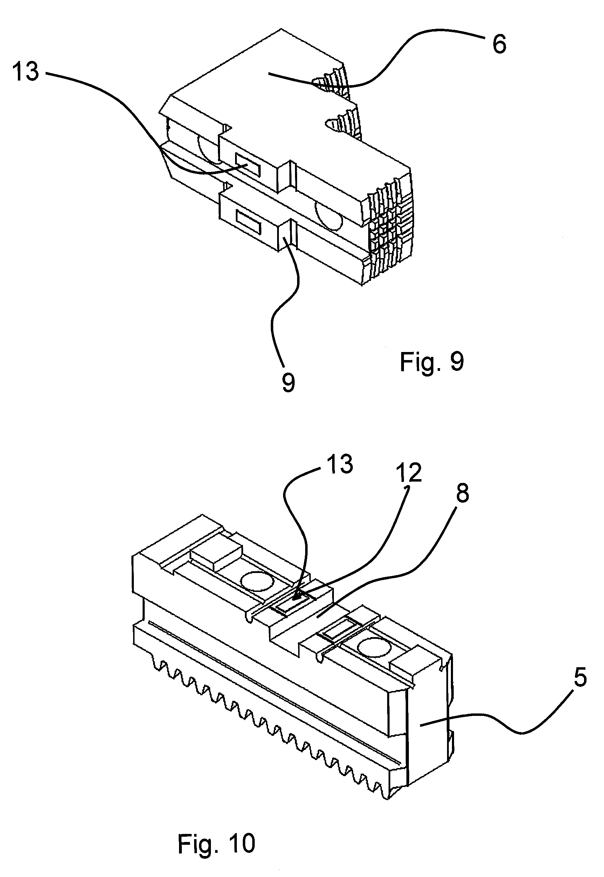

In den Fig. 4 bis 15 ist dargestellt, an welchen unterschiedlichen Stellen von der Grundbacke 5 oder der Aufsatzbacke 6 die Sensorplättchen 13 positioniert werden können, nämlich an dem Quersteg 9 des Kreuzversatzes 7 einer Grundbacke 5 bzw. an dem Quersteg 9 des Kreuzversatzes 7 einer Aufsatzbacke 6. Generell ist es auch möglich, eine Platzierung im Bereich der Nut 8 vorzusehen oder mehrere Sensoren 11 bzw. Sensorplättchen 13 einzusetzen. Die Dimensionierung des Meßkörpers, also beispielsweise das Querstegs 9 ist dabei so auszulegen, dass bei der Maximalkraft eine ausreichend große Verformung und damit Längs- und Querdehnung auftritt. Um die notwendigen Dehnungen zu erreichen, kann auch die Form des Kreuzversatzes 7 angepasst werden.

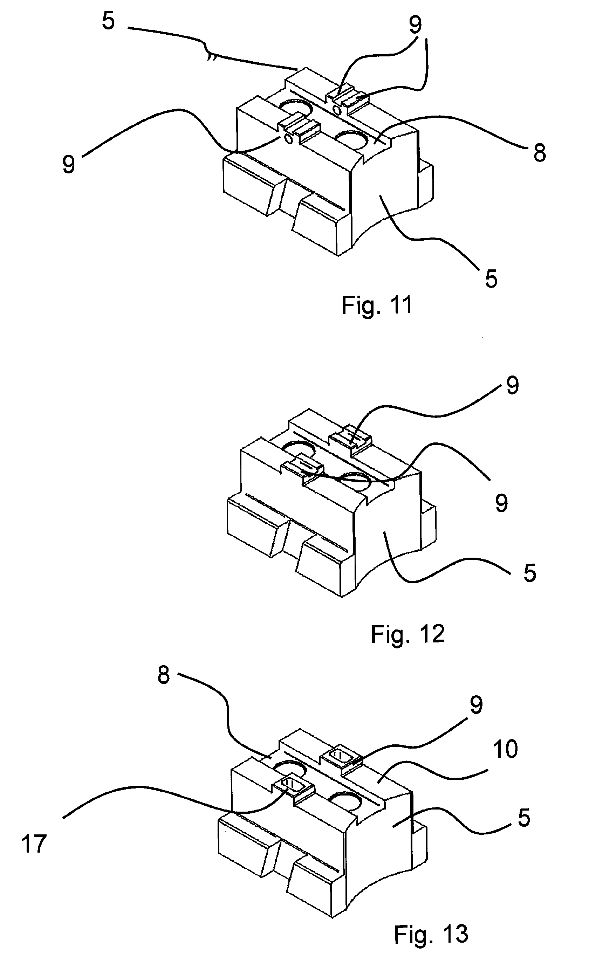

In den Figuren 11 -13 ist dargestellt, wie durch zusätzliche Längs- und Quernuten sowie Bohrungen und Taschen die Steifigkeit des Querstegs und damit die Empfindlichkeit der darauf befindlichen nicht dargestellten Sensorplättchen beeinflusst wird. Zusätzlich können durch Bohrungen 7 Versorgungs- und Signalleitungen direkt zur Dünnfilmstruktur des Sensorplättchens 13 geführt werden.

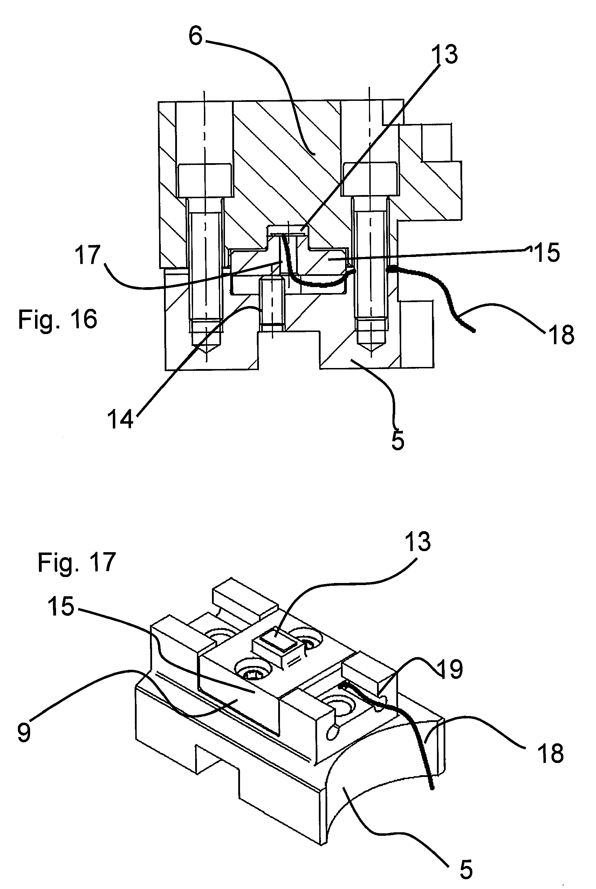

Dies bietet alternativ die Möglichkeit, die Sensorplättchen mit der Dünnfilmstruktur nach unten, anzubringen. Dadurch sind die Dünnfilmstruktur und deren Kontaktierungsstellen mit den angelöteten Leitungen von außen geschützt und können zusätzlich vergossen werden. Zur Energie- und Datenübertragung aus dem drehenden Spannfutter 1 ist eine Telemetrie-Einheit vorgesehen (Figur 17).

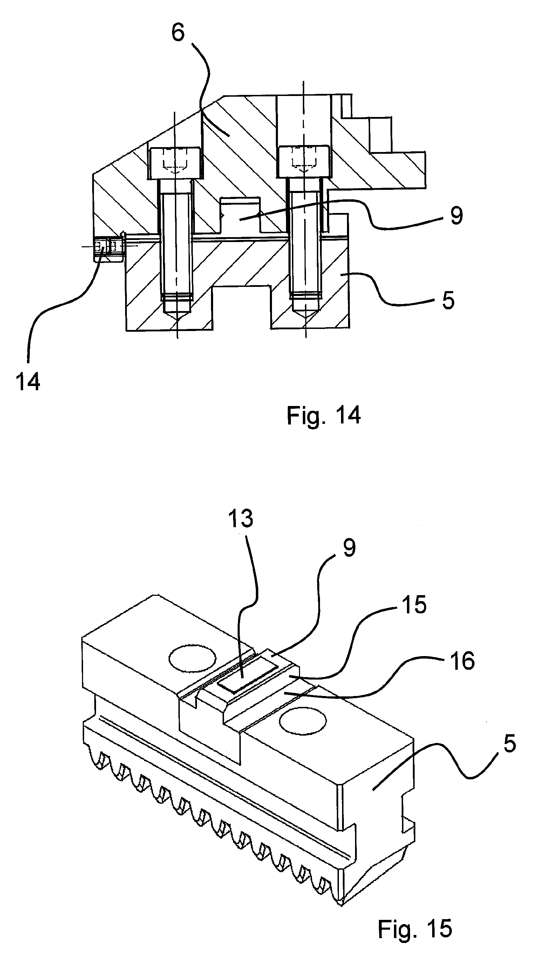

Bei dem in der Fig. 14 dargestellten Ausführungsbeispiel ist weiterhin eine Justierschraube 14 vorhanden, mit der die Lage der Aufsatzbacke 6 gegenüber der Grundbacke 5 justiert werden kann, um so definierte Ausgangsbedingungen bei der Ausrichtung von Grundbacke 5 und Aufsatzbacke 6 zu erzielen.

Figur 15 zeigt, dass das Sensorplättchen 13 nicht nur direkt auf dem Quersteg 9 einer Grundbacke 5 oder Aufsatzbacke 6 aufgeschweißt sein muss. Vielmehr kann das Sensorplättchen 13 aus wirtschaftlichen sowie fertigungs- und montagetechnischen Gründen auch auf einem Nutenstein 15 angebracht sein.

Es ist nicht zwingend erforderlich, dass das Sensorplättchen 13 separat gefertigt und dann durch Laserschweißen an der Grundbacke 5 befestigt werden muss, da auch die Möglichkeit besteht, zur Realisierung des Sensorplättchens 13 erforderliche Dünnfilmstrukturen unmittelbar an der Backe auszubilden. Da die Direktstrukturierung einer kompletten Grundbacke 5 in der Regel aufgrund des kostspieligen Bauraums in den Beschichtungsanlagen aus wirtschaftlichen Gründen ausscheidet, kann ein formsteifer Nutenstein 15 verwendet werden, der in T-Form gestaltet ist, also Versteifungsleisten 16 aufweist und der dann in der Backe befestigt wird.

Alternativ besteht die Möglichkeit, der Grundbacke 5 eine elektrische Speicherzelle und ein Funkmodul zuzuordnen, umso die vom Sensor 11 erfassten Daten in ein stationäres System zu übertragen.

Figur 16: Zusätzlich ist auch bei der Verwendung eines Nutensteines 15 eine Feinjustage über Stellglieder im Grundbacken 5 denkbar.

### Bezugszeichenliste

- 1: Spannfutter
- 2: Futterkörper
- 3: Führungsaufnahme
- 4: Spannbacken
- 5: Grundbacken
- 6: Aufsatzbacke
- 7: Kreuzversatz
- 8: Nut
- 9: Quersteg
- 10: Nutwand
- 11: Sensor
- 12: Dehnmessstreifen
- 13: Sensorplättchen
- 14: Justierschraube
- 15: Nutenstein
- 16: Versteifungsleisten
- 17: Bohrung
- 18: Versorgungs- und Signalleitung
- 19: Tasche

## Patentansprüche

1. Spannfutter mit einem Futterkörper (2), in dem in radial verlaufenden Führungsaufnahmen (3) Spannbacken (4) verstellbar geführt sind, die aus einer Grundbacke (5) und einer an der Grundbacke (5) in einem Kreuzversatz (7) angeordneten Aufsatzbacke (6) gebildet sind, und mit mindestens einem einer der Spannbacken (4) zugeordneten Sensor (11) zur Erfassung der Spannkraft, **dadurch gekennzeichnet, dass** der Sensor (11) dem Kreuzversatz zugeordnet ist.

2. Spannfutter nach Anspruch 1, **dadurch gekennzeichnet, dass** bei dem Kreuzversatz (7), der durch senkrecht zueinander ausgerichtete Nut (8) und Quersteg (9) in einer der Backen von Grundbacke (5) und Aufsatzbacke (6) mit korrespondierenden Strukturen in der anderen Backe gebildet ist, der Sensor (11) der der anderen Backe zugewandten Oberfläche des Quersteges (9) zugeordnet ist.

3. Spannfutter nach Anspruch 2, **dadurch gekennzeichnet, dass** der Sensor (11) an der Grundbacke (5) angeordnet ist.

4. Spannfutter nach einem der Ansprüche 1 bis 3, **dadurch gekennzeichnet, dass** der Sensor (11) aus einem Dehnmessstreifen (12) (DMS) gebildet ist.

5. Spannfutter nach einem der Ansprüche 1 bis 4 , **dadurch gekennzeichnet, dass** der Sensor (11) durch ein Sensorplättchen (13) gebildet ist, das aus einem Trägersubstrat besteht, in dem die DMS-Messstruktur ausgebildet ist.

6. Spannfutter nach Anspruch 5, **dadurch gekennzeichnet, dass** der Quersteg (9) an einem in der Backe positionierbaren Nutenstein (15) ausgebildet ist.

7. Spannfutter nach Anspruch 5 oder 6, **dadurch gekennzeichnet, dass** das Sensorplättchen (13) dem Quersteg (9) zugeordnet ist, an dem durch Sputtern und Fotolithografie die Messstruktur direkt ausgebildet ist.

8. Spannfutter nach einem der Ansprüche 1 bis 7, **dadurch gekennzeichnet, dass** im Quersteg (9) Bohrungen (17) und Taschen (19) angebracht sind, über welche Versorgungs- und Signalleitungen (18) zur Kontaktierung der nach unten gerichteten Messstrukturen verlaufen.

9. Spannfutter nach einem der Ansprüche 6 bis 8, **dadurch gekennzeichnet, dass** der Nutenstein (15) Versteifungsleisten (16) aufweist.

10. Spannfutter nach einem der Ansprüche 2 bis 9, **dadurch gekennzeichnet, dass** zur Feinjustage ein Stellglied (14) zwischen der Grundbacke (5) und der Aufsatzbacke (6) bzw. dem Nutenstein (15) vorgesehen ist.

11. Spannfutter nach einem der Ansprüche 1 bis 10, **dadurch gekennzeichnet, dass** eine Telemetrie-Einheit zur berührungslosen Energie- und Datenübertragung vorgesehen ist.

12. Spannfutter nach einem der Ansprüche 1 bis 11, **dadurch gekennzeichnet, dass** der Grundbacke (5) eine elektrische Speicherzelle und ein Funkmodul zugeordnet ist.

## Claims

1. Chuck having a chuck body (2) in which clamping jaws (4) are movably carried in radially extending guide seats (3), which clamping jaws are composed of a base jaw (5) and a top jaw (6) arranged on the base jaw (5) in a tongue and groove (7), and having at least one sensor (11) for sensing the clamping force, which sensor is associated with one of the clamping jaws (4), **characterized in that** the sensor (11) is associated with the tongue and groove.

2. Chuck according to claim 1, **characterized in that**, in the tongue and groove (7), which is composed of a groove (8) and cross web (9) that are perpendicular to one another in one of the two jaws, either the base jaw (5) or top jaw (6), with corresponding structures in the other of the two jaws, the sensor (11) is associated with the surface of the cross web (9) facing the other jaw.

3. Chuck according to claim 2, **characterized in that** the sensor (11) is located on the base jaw (5).

4. Chuck according to one of claims 1 to 3, **characterized in that** the sensor (11) is composed of a strain gage (12).

5. Chuck according to one of claims 1 to 4, **characterized in that** the sensor (11) is composed of a sensor film (13) made of a support substrate in which the strain gage measurement structure is formed.

6. Chuck according to claim 5, **characterized in that** the cross web (9) is formed on a tenon block (15) that can be positioned in the jaw.

7. Chuck according to claim 5 or 6, **characterized in that** the sensor film (13) is associated with the cross web (9) on which the measuring structure is formed directly by sputtering and photolithography.

8. Chuck according to one of claims 1 to 7, **characterized in that** holes (17) and recesses (19) are placed in the cross web (9), through which supply and signal lines (18) are routed for contacting the downward-facing measuring structures.

9. Chuck according to one of claims 6 to 8, **characterized in that** the tenon block (15) has stiffening strips (16).

10. Chuck according to one of claims 2 to 9, **characterized in that** an actuator (14) is provided between the base jaw (5) and the top jaw (6) or the tenon block (15) for the purpose of fine adjustment.

11. Chuck according to one of claims 1 to 10, **characterized in that** a telemetry unit is provided for contactless transmission of energy and data.

12. Chuck according to one of claims 1 to 11, **characterized in that** an electric storage cell and a radio module are associated with the base jaw (5).

## Revendications

1. Mandrin de serrage comprenant un corps de mandrin (2) dans lequel des mors de serrage (4) sont guidés de manière réglable dans des logements de guidage (3) s'étendant radialement, lesquels mors de serrage (4) sont formés d'un mors de base (5) et d'un mors rapporté (6) disposé dans une entretoise en croix (7) sur le mors de base (5), et comprenant au moins un capteur (11) associé aux mors de serrage (4) pour détecter la force de serrage, **caractérisé en ce que** le capteur (11) est associé à l'entretoise en croix.

2. Mandrin de serrage selon la revendication 1, **caractérisé en ce que** sur l'entretoise en croix (7) formée par une rainure (8) et une nervure transversale (9) perpendiculaires l'une à l'autre dans le mors de base (5) ou le mors rapporté (6), avec des structures correspondantes dans l'autre mors respectif, le capteur (11) est associé à la surface de la nervure transversale (9) tournée vers l'autre mors.

3. Mandrin de serrage selon la revendication 2, **caractérisé en ce que** le capteur (11) est disposé sur le mors de base (5).

4. Mandrin de serrage selon l'une des revendications 1 à 3, **caractérisé en ce que** le capteur (11) est formé par une jauge de contrainte (12).

5. Mandrin de serrage selon l'une des revendications 1 à 4, **caractérisé en ce que** le capteur (11) est formé par une plaquette détectrice (13) qui est constituée d'un substrat de support dans lequel la structure de mesure de la jauge de contrainte est réalisée.

6. Mandrin de serrage selon la revendication 5, **caractérisé en ce que** la nervure transversale (9) est réalisée sur un coulisseau (15) positionnable dans le mors.

7. Mandrin de serrage selon la revendication 5 ou 6, **caractérisé en ce que** la plaquette détectrice (13) est associée à la nervure transversale (9) sur laquelle la structure de mesure est réalisée directement par pulvérisation cathodique et photolithographie.

8. Mandrin de serrage selon l'une des revendications 1 à 7, **caractérisé en ce que** dans la nervure transversale (9) sont réalisés des perçages (17) et des poches (19) par lesquels passent des lignes d'alimentation et de signalisation (18) servant à établir le contact avec les structures de mesure dirigées vers le bas.

9. Mandrin de serrage selon l'une des revendications 6 à 8, **caractérisé en ce que** le coulisseau (15) présente des barres de renfort (16).

10. Mandrin de serrage selon l'une des revendications 2 à 9, **caractérisé en ce qu'**un organe de réglage (14) est prévu entre le mors de base (5) et le mors rapporté (5) ou le coulisseau (15) pour le réglage fin.

11. Mandrin de serrage selon l'une des revendications 1 à 10, **caractérisé en ce qu'**une unité de télémétrie est prévue pour la transmission sans contact d'énergie et de données.

12. Mandrin de serrage selon l'une des revendications 1 à 11, **caractérisé en ce qu'**un élément d'accumulation électrique et un module radio sont associés au mors de base (5).
